# NEW EUROPEAN PATENT SPECIFICATION

(11) **EP 0 737 210 B2**
(45) Date of publication and mention of the opposition decision: **22.01.2003**
(45) Mention of the grant of the patent: 24.11.1999
(21) Application number: 95903825.8
(22) Date of filing: 21.12.1994
(51) Int. Cl.: C08B 31/00, D21H 17/29

(54) **METHOD FOR PRODUCING OF CATIONIC STARCH**
VERFAHREN ZUR HERSTELLUNG KATIONISCHER STÄRKE
PROCEDE POUR PRODUIRE UN AMIDON CATIONIQUE

(30) Priority: 27.12.1993 FI 935883
(43) Date of publication of application: 16.10.1996
(73) Proprietor: RAISIO CHEMICALS OY, 21200 Raisio (FI)
(72) Inventor: VIHERVAARA, Tapio, 20720 Turku (FI); PAAKKANEN, Anna, 90570 Oulu (FI); KÄKI, Jouko, 20300 Turku (FI)
(74) Representative: Haimelin, Jukka Ilmari
(86) International application number: FI9400576
(87) International publication number: WO95018157

(56) References cited:
- SE-A- 7 714 787
- US-A- 3 842 005
- US-A- 4 146 515
- CHEMICAL ABSTRACTS, Volume 120, No. 24, 13 June 1994, (Columbus, Ohio, USA), the Abstract No, 301471; & FI,B,90 679, (VIHERVAARA, TAPIO et al.), 30 November 1993.
- R.L. Whistler and E.F. Paschall "Starch: Chemistry and Technology" Vol.1,1965,pp. 469-470
- English translatin of SE-A-7714787

## Description

Starch is a raw material commonly used in paper manufacture. The principal role of starch is to improve the strength of paper. Starch can also be used as an adhesive in surface sizing and as a binder in coating formulations in place of a more expensive latex binder.

However, starch both in native unmodified form or modified by oxidization alone bonds weakly to the fiber, whereby the unbonded starch or the starch redissolved during the repulping of broke elevates the chemical and biological oxygen demand of circulating waters, and eventually, of waste water in a paper mill.

The bonding of starch to cellulosic fiber can be improved by adding cationic groups to the primary portion of starch, that is, by cationizing the starch. Cationized starch bonds better to the fiber by virtue of the negative charge, or anionic character, of the cellulosic fiber. By using cationized starches, the addition rate of starch in paper manufacture can be raised substantially without increasing the amount of soluble starch wasted in circulating water, that is, without increasing the chemical and biological oxygen demand of circulating and waste waters.

Several methods have been developed for the cationization of starches. The cationizing chemical can be selected from a group comprising both tertiary and quaternary reagents that are capable of reacting with the OH groups of starch. The cationic character of the reagent results from the nitrogen atom of the reagent. If the nitrogen bonds three substituents, the reagent is called tertiary, while a reagent having four substitutients bonded to the nitrogen is called quaternary. Today, a majority of cationic starches is modified with a quaternary reagent such as 2,3-epoxypropyltrimethylammonium chloride or 3-chloro-2-hydroxypropyltrimethylammonium chloride. Quaternary cationizing chemicals are characterized in that they can retain their cationic charge also in socalled neutral paper manufacture performed within the pH range of 6.5 - 8.5.

Of the practicable methods, the most commonly used is the so-called wet method. In this method, starch is slurried in water to form an aqueous suspension with a consistency of approx. 40 %, the cationizing chemical is added and pH is adjusted to within pH 11 - 12. At these conditions and a temperature of approx. 40 - 45 °C, starch will be cationized in a reaction completed in approx. 12 - 16 hours. The starch slurry is usually neutralized at the end of the reaction with a mineral acid such as hydrochloric acid or sulfuric acid, after which the starch can be either filtered and dried prior to shipping to a customer, or alternatively, shipped as such in slurry form. The essential of the method is that the starch stays throughout the process in slurry form, that is, retaining the granular structure of the starch during the entire cationizing step. A limit to the foregoing method is set by the solubility of starch which increases rapidly if the degree of substitution exceeds 0.05. With the increasing solubility of the starch, the mixing of the slurry becomes more difficult and finally impossible due to partial or complete gelation of the starch. Even a slight increase of solubility makes filtration of the starch difficult, finally stopping it altogether.

Also such cationizing methods have been developed in which water as the suspending medium has been replaced by organic solvents, typically alcohols such as ethanol. Then, the degree of substitution can be elevated substantially without causing any significant dissolution of the starch in the suspending medium, that is, the organic solvent. Using ethanol as the suspending medium, the degree of substitution can be easily increased to a range of 0.5 - 1.0. However, the use of organic solvents is not desirable due to occupational health reasons. Moreover, the use of inflammable liquids requires substantial investments in the safety of an industrial plant.

Methods requiring no suspending medium at all have also been developed. In the art of starch making, these are called dry cationization methods. According to such a method, the cationizing chemical essentially consisting of 2,3-epoxypropyltrimethylammonium chloride is blended with a mixture of pulverized starch and a basic catalyst such as NaOH or Ca(OH)₂. By agitating the dry mixture with a screw mixer or equivalent agitator, possibly using anticaking agents as additives, sufficient homogeneity is attained. A problem of the method is therein that the purification of the end product is usually impossible. In this method, all chemicals added to the cationization process remain in the modified, pulverized starch, and still worse, a portion of dry-cationized starch becomes cold-soluble during the reaction due to the cationization and temperature applied, thus causing a difficulty in the handling of the cationized starch and particularly the slurrying and cooking of the cationic starch at paper mills. However, dry-cationization can achieve a higher degree of cationization than the conventional slurry cationization, that is, the wet cationization.

Further, methods have been developed in which cationization is carried out in an aqueous solution. Here, starch is allowed to gelatinize under the effect of a base and temperature thus dissolving the starch in an aqueous medium, whereby essentially homogeneous reaction conditions are established (as compared with the heterogenic systems described above). A difficulty herein is formed by the high viscosity of the dissolved cationic starch. Then, in order to achieve effective utilization of the starch in paper manufacture, that is, in a sufficiently high solids content, the straight-chain portion of starch must first be broken into shorter molecular chains. Conventionally, the chain-shortening methods used include acid hydrolysis or hypochlorite oxidation, for instance.

Both acid hydrolysis and hypochlorite oxidation produce a great amount of soluble, short-chain oligosaccharides which deteriorate the bonding qualities of cationic starch. Hypochlorite oxidation, in particular, produces an abundant number of carboxylic groups in the starch, whereby the quaternary groups of the cationic starch form an internal salt with the acid groups, which lowers the total cationic charge of the starch.

The cationization methods of starch known in the art from patent publications or other sources are divided in accordance with the foregoing into the following categories:
1. Slurry cationization
   - cationization in a water suspension, whereby the solids may be maximally 43 %.
2. Dry cationization
   - the solids may be very high, up to 80 %, while the starch stays in pulverized form throughout the reaction.
3. Solvent cationization
   - water as the reaction medium is replaced by an organic solvent.

Contrary to these conventional methods, the method according to the invention in characterized in that the starch structure is split with a peroxide prior to the cationizing step and that the solids of the reacting mixture during the cationizing reaction is maintained over 50 %, advantageously over 55 %.

As is well known, the cationizing reaction requires a basic catalyst, which can be selected from a large group of bases, not only using sodium hydroxide as described in the examples. This detail is not essential to the spirit of the invention.

The cationizing chemical is advantageously 2,3-epoxypropyltrimethyl ammonium chloride which is well known in the art and is only mentioned herein as a reference characterizing the end product.

Essential to the method according to the invention is thus, that the cationizing step is carried out in an aqueous solution in which the solids during the cationizing reaction is maintained over 50 %, advantageously over 55 %.

### Example 1

### Hydrogen peroxide oxidation of starch

Native potato starch was slurried in water by adding 1250 g of starch (solids 80 %) in 1250 g of water, whereby starch slurry of 40 % solids was obtained. The reaction mixture was adjusted to pH 7.5 using dilute sodium hydroxide solution. After thorough mixing, 50 % hydrogen peroxide was added to the slurry. After the completion of the reaction, the slurry was adjusted to pH 6.5 with dilute hydrochloric acid. The reaction was repeated with different amounts of hydrogen peroxide in order to determine the effect of the peroxide. The viscosity of the starch determined after the completion of the reaction is listed in Table 1 below.

**Table 1**

| Lot no. | H₂O₂ (% of starch amount) | Viscosity 5 % (at 60 °C) |
|---|---|---|
| 0 | 0.00 | 1600 |
| 1 | 0.02 | 430 |
| 2 | 0.06 | 210 |
| 3 | 0.08 | 135 |
| 4 | 0.10 | 105 |
| 5 | 0.15 | 62 |
| 6 | 0.20 | 31 |
| 7 | 0.30 | 22 |

Each test lot was filtered through a paper filter and the proportion of soluble sugars, or oligosaccharides, was computed from the solids of the filtrate. In all cases the amount of such sugars was less than 1 % (while the corresponding amount by hypochlorite oxidization and acid hydrolysis was in the order of 5 - 10 %).

### Example 2

A sample of lot #2 was taken as 40 % slurry from the test series products of the above example and cationized in the formulation described below using 80 % Raisacat 65 (2,3(2,3-epoxypropyltrimethylammonium chloride) with 71 % activity.

| | Weight | Solids |
|---|---|---|
| Starch slurry sample #2 | 2140 g | 856 g |
| Raisacat 65 | 1130 g | 904 g |
| 50 % NaOH | 50 g | 25 g |
| Total | 3320 g | 1785 g |

The solids content of the reaction mixture was 53.8 %. The temperature of the reaction mixture was elevated to about 60 °C. The mixture, which changes from a slurry into a solution within approximately 1 h after the caustic addition, was agitated in a reactor equipped with an anchor agitator for 6 h at approx. 60 °C and subsequently neutralized with approx. 50 kg of approx. 30 % hydrochloric acid. Using conventional analytic methods, the degree of substitution in the product was determined as 0.72. The product was diluted to a 20-% aqueous solution for exact determination of viscosity. The viscosity of the product was 2120 cP at 20 °C.

### Example 3

A sample of lot #7 was taken from the test series products of Example 1 and dried to 80 % moisture content. The starch was slurried into a mixture of Raisacat 65 and water, and the caustic was added to achieve the formulation given in the table below. The other steps of this example were performed according to Example 2.

| | Weight | Solids |
|---|---|---|
| Starch slurry sample #7 | 1070 g | 856 g |
| Raisacat 65 | 1130 g | 904 g |
| 50 % NaOH | 50 g | 25 g |
| Water | 550 g | |
| Total | 2800 g | 1785 g |

The solids content of the reaction mixture was 63.8 %.

The degree of substitution in the product was determined as 0.75. Diluted to 30 %, the viscosity of the product was 880 cP at 20 °C.

## Claims

1. A method of producing cationic starch derivatives in water solution form, **characterized in that** the starch structure is split with a peroxide prior to the cationizing step and that the solids of the reacting mixture during the cationizing reaction is maintained over 50 %, advantageously over 55 %.

2. A method as defined in claim 1, **characterized in that** starch is added to the reaction mixture in pulverized or slurry form prior to the cationizing step.

3. A method as defined in any of foregoing claims 1-2, **characterized in that** the amount of the cationizing chemical is 40 - 160 %, most advantageously 80 - 120 %, of the amount of starch.

4. A method as defined in any of foregoing claims 1-3, **characterized in that** the cationizing chemical used is 2,3-epoxypropyl trimethyl ammonium chloride.

## Patentansprüche

1. Verfahren zur Herstellung kationischer Stärkederivate in Form wäßriger Lösungen, **dadurch gekennzeichnet, daß** die Stärkestruktur mit einem Peroxid vor der Kationisierungsreaktion gespalten und der Feststoffgehalt des Reaktionsgemisches während der Kationisierungsreaktion auf einem Wert von über 50%, vorzugsweise von über 55%, gehalten werden.

2. Verfahren nach Anspruch 1, **dadurch gekennzeichnet, daß** die Stärke dem Reaktionsgemisch vor dem Kationisierungsschritt in pulverisierter oder aufgeschlämmter Form zugesetzt wird.

3. Verfahren nach einem der Ansprüche 1 bis 2, **dadurch gekennzeichnet, daß** ein kationisierendes chemisches Mittel in einer Menge von 40 bis 160%, vorzugsweise 80 bis 120%, bezogen auf die Menge der Stärke, verwendet wird.

4. Verfahren nach einem der Ansprüche 1 bis 3, **dadurch gekennzeichnet, daß** als kationisierendes chemisches Mittel 2,3-Epoxypropyltrimethylammoniumchlorid verwendet wird.

## Revendications

1. Procédé pour la production de dérivé d'amidon cationique sous une forme soluble dans l'eau, **caractérisé en ce que** la structure de l'amidon est clivée au moyen d'un peroxyde avant l'étape de cationisation et **en ce que** la teneur en matière solide du mélange réactionnel au cours de la réaction de cationisation est maintenue au-dessus de 50 % et avantageusement au-dessus de 55 %.

2. Procédé suivant la revendication 1, **caractérisé en ce que** l'amidon est ajouté au mélange réactionnel sous forme de poudre ou de boue avant l'étape de cationisation.

3. Procédé suivant l'une quelconque des revendications 1 à 2, **caractérisé en ce que** la quantité d'agent chimique cationisant représente 40-160 %, et mieux 80-120 %, de la quantité d'amidon.

4. Procédé suivant l'une quelconque des revendications 1 à 3, **caractérisé en ce que** l'agent chimique cationisant utilisé est le chlorure de 2,3-époxypropyltriméthylammonium.
